# DEMANDE DE BREVET EUROPEEN

(11) **EP 3 447 337 A1**
(43) Date de publication de la demande: **27.02.2019**
(21) Numéro de dépôt: 17187901.8
(22) Date de dépôt: 25.08.2017
(51) Int. Cl.: F16H 59/02

(54) **DISPOSITIF DE PROTECTION D'UN SOUFFLET DE LEVIER DE COMMANDE D'UNE BOITE DE VITESSES**

(71) Demandeur: DURA Automotive Holdings U.K., Ltd., Birmingham, B35 7AG (GB)
(72) Inventeur: DEVAUCHELLE, Frédéric, 78170 LA CELLE SAINT CLOUD (FR); GOMES, Adrien, 78450 VILLEPREUX (FR)
(74) Mandataire: Cabinet Laurent & Charras

(57) **Abrégé**

Dispositif (1) de protection d'un soufflet de levier de commande dans une boîte de vitesses d'un véhicule automobile comprenant :
- un boîtier (2) avec une ouverture ;
- un levier de commande (3) monté pivotant à l'intérieur dudit boîtier (2) et s'étendant à travers l'ouverture, extérieurement au boîtier (2) ;
- un soufflet (5) en matériau souple attaché d'une part à une partie du boîtier (2) et, d'autre part, au levier de commande (3) pour couvrir l'ouverture.

Selon invention, le dispositif (1) comprend un élément de protection (8a) fixé sur le levier de commande (3) et en saillie transversalement par rapport au levier de commande (3) de sorte à chevaucher, selon au moins une direction, une bordure périphérique de l'ouverture du boîtier (2) pour constituer un support de soufflet (5) et empêcher le pincement dudit soufflet (5) entre une partie du levier de commande (3) et le boîtier (2) lors du pivotement du levier de commande (3).

## Description

### DOMAINE TECHNIQUE

L'invention se rattache au secteur technique des boîtes de vitesses d'un véhicule automobile, aussi bien manuelles qu'automatiques, et concerne plus particulièrement un dispositif permettant d'éviter le pincement d'un soufflet entre un levier de commande et une partie fixe de la boîte de vitesses.

### ART ANTERIEUR

Dans l'état de la technique, il est connu des boîtes de vitesses d'un véhicule automobile, aussi bien manuelles qu'automatiques, comprenant un boîtier avec une ouverture, un levier de commande monté pivotant à l'intérieur du boîtier et s'étendant à travers l'ouverture extérieurement au boîtier, et un soufflet en matériau souple attaché d'une part à partie du boîtier et, d'autre part, au levier de commande pour couvrir l'ouverture.

L'inconvénient de l'état de la technique réside dans le fait que le soufflet attaché au levier de commande peut se coincer entre une partie du levier de commande et une bordure périphérique de l'ouverture du boîtier lors du pivotement dudit levier de commande. Le soufflet peut ainsi être endommagé.

### EXPOSE DE L'INVENTION

L'un des buts de l'invention est donc de proposer un dispositif protection d'un soufflet de levier de commande dans une boîte de vitesses d'un véhicule automobile.

Afin de résoudre les problèmes précités, il a été mis au point, un dispositif de protection d'un soufflet de levier de commande dans une boîte de vitesses d'un véhicule automobile comprenant :
- un boîtier avec une ouverture ;
- un levier de commande monté pivotant à l'intérieur dudit boîtier et s'étendant à travers l'ouverture, extérieurement au boîtier ;
- un soufflet en matériau souple attaché d'une part à une partie du boîtier et, d'autre part, au levier de commande pour couvrir l'ouverture.

Selon l'invention, le dispositif comprend un élément de protection fixé sur le levier de commande de la boîte de vitesses et en saillie transversalement par rapport audit levier de commande, de sorte à chevaucher, selon au moins une direction, une bordure périphérique de l'ouverture du boîtier pour constituer un support de soufflet et empêcher le pincement dudit soufflet entre une partie du levier de commande et le boîtier lors du pivotement du levier de commande.

De préférence, l'élément de protection forme un plan support incliné en direction du boîtier par rapport au plan transversal du levier de commande.

Selon une forme de réalisation particulière, l'élément de protection est solidaire d'une gâchette de marche arrière que comprend le levier de commande, et de préférence monobloc avec ladite gâchette de marche arrière.

De cette manière le dispositif selon invention est simple et peu onéreux à fabriquer et à assembler.

Selon une forme de réalisation particulière, dans une boîte de vitesse avec un levier comprenant une portion intermédiaire inclinée, et une gâchette de marche arrière comprenant une portion de manchon disposée autour de la portion inclinée du levier, l'élément de protection définit un plan support prolongeant ledit manchon de sorte à faire saillie transversalement par rapport à une portion inférieure du levier de commande.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
- la figure 1 est une représentation schématique illustrant, vu de côté, un dispositif de protection d'un soufflet de levier de commande dans une boîte de vitesses d'un véhicule automobile, le levier de commande étant en position neutre ;
- la figure 2 est une représentation schématique similaire à celle de la figure 1, le levier de commande étant pivoté pour la sélection d'une vitesse.

### EXPOSE DETAILLE DE L'INVENTION

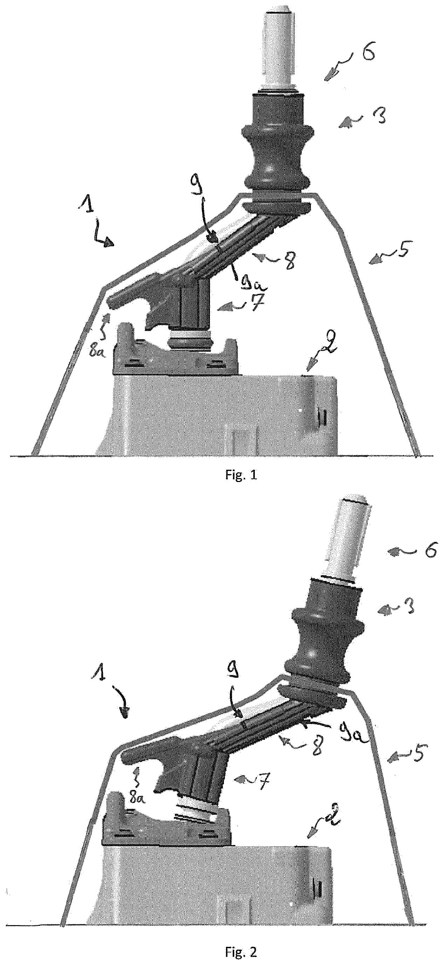

En référence aux figures 1 et 2, l'invention concerne un dispositif (1) pour empêcher le pincement et la détérioration d'un soufflet (5) de levier de commande (3) dans une boîte de vitesses, manuelle ou automatique, d'un véhicule automobile.

D'une manière connue, une boîte de vitesses comprend un boîtier (2) avec une ouverture, un levier de commande (3) monté pivotant à l'intérieur dudit boîtier (2) et s'étendant à travers l'ouverture, extérieurement au boîtier (2), un soufflet (5) en matériau souple attaché d'une part à une partie du boîtier (2) et, d'autre part, au levier de commande (3) pour couvrir l'ouverture.

Selon l'invention, le dispositif (1) comprend un élément de protection (8a) fixé sur le levier de commande (3). L'élément de protection (8a) se présente par exemple sous la forme d'un plan support incliné en direction du boîtier (2) par rapport au plan transversal du levier de commande (3).

L'élément de protection (8a) fait saillie transversalement par rapport au levier de commande (3) de sorte à chevaucher, selon au moins une direction notamment alignée avec au moins un plan de pivotement du levier de commande (3), une bordure périphérique du boîtier (2).

Ainsi, en référence à la figure 2, l'élément de protection (8a) constitue un support de soufflet (5) et empêche le pincement dudit soufflet (5) entre une partie du levier de commande (3) et le boîtier (2) lorsque le levier de commande (3) est pivoté du côté de l'élément de protection (8a).

Dans une forme de réalisation particulière, et pour simplifier la conception du dispositif (1) de protection selon l'invention, ledit élément de protection (8a) est fixé à une gâchette (9) de marche arrière du levier de commande (3) et, de préférence, forme partie intégrante avec ladite gâchette (9).

Par exemple, d'une manière connue, le levier de commande (3) peut être composé d'une portion supérieure (6) sensiblement verticale, d'une portion intermédiaire inclinée (8), et d'une portion inférieure (7) sensiblement verticale, et peut comprendre une gâchette (9) de marche arrière comprenant une portion de manchon (9a) disposée autour de la portion inclinée (8) du levier de commande (3). La direction « verticale » désigne la direction générale du levier de commande (3) lorsqu'il se trouve en position neutre (voir figure 1).

Dans cette configuration, l'élément de protection (8a) définit un plan support prolongeant le manchon (9a) de la gâchette (9) de marche arrière, de sorte à faire saillie transversalement par rapport à la portion inférieure (7) du levier de commande (3).

De cette manière et en référence à la figure 2, lorsque le levier de commande (3) est pivoté du côté de l'élément de protection (8a), ledit élément de protection (8a) supporte le soufflet (5) et l'empêche de se plier et de se coincer entre la bordure périphérique de l'ouverture du boîtier (2) et une partie du levier de commande (3), telle que la gâchette (9) de marche arrière.

Ainsi, il ressort de ce qui précède que l'invention fournit un dispositif (1) de protection d'un soufflet (5) de levier de commande (3) d'une boîte de vitesses.

## Revendications

1. Dispositif (1) de protection d'un soufflet (5) de levier de commande dans une boîte de vitesses d'un véhicule automobile comprenant :
- un boîtier (2) avec une ouverture ;
- un levier de commande (3) monté pivotant à l'intérieur dudit boîtier (2) et s'étendant à travers l'ouverture, extérieurement au boîtier (2) ;
- un soufflet (5) en matériau souple attaché d'une part à une partie du boîtier (2) et, d'autre part, au levier de commande (3) pour couvrir l'ouverture ;
***caractérisé* en ce que** le dispositif (1) comprend un élément de protection (8a) fixé sur le levier de commande (3) et en saillie transversalement par rapport au levier de commande (3) de sorte à chevaucher, selon au moins une direction, une bordure périphérique de l'ouverture du boîtier (2) pour constituer un support de soufflet (5) et empêcher le pincement dudit soufflet (5) entre une partie du levier de commande (3) et le boîtier (2) lors du pivotement du levier de commande (3).

2. Dispositif (1) selon la revendication 1, ***caractérisé* en ce que** l'élément de protection (8a) forme un plan support incliné en direction du boîtier (2) par rapport au plan transversal du levier de commande (3).

3. Dispositif (1) selon l'une des revendications précédentes, ***caractérisé* en ce que** l'élément de protection (8a) est solidaire d'une gâchette (9) de marche arrière que comprend le levier de commande (3).

4. Dispositif (1) selon la revendication 3, ***caractérisé* en ce que** l'élément de protection (8a) est monobloc avec la gâchette (9) de marche arrière.

5. Dispositif (1) selon la revendication 4, ***caractérisé* en ce que**, dans une boîte de vitesse avec un levier de commande (3) comprenant une portion intermédiaire inclinée (8), et une gâchette (9) de marche arrière comprenant une portion de manchon (9a) disposée autour de la portion inclinée (8) du levier de commande (3), l'élément de protection (8a) définit un plan support prolongeant ledit manchon (9a) de sorte à faire saillie transversalement par rapport à une portion inférieure (7) du levier de commande (3).
